# EUROPEAN PATENT APPLICATION

(11) **EP 2 071 323 A2**
(43) Date of publication of application: **17.06.2009**
(21) Application number: 08170538.6
(22) Date of filing: 02.12.2008
(51) Int. Cl.: G01N 21/90, B65G 15/58

(54) **Apparatus and method for facilitating the inspection of containers and the like**

(30) Priority: 07.12.2007 US 999842
(71) Applicant: Emhart Glass S.A., 6330 Cham (CH)
(72) Inventor: Thomas, Alan E., Clearwater, FL 34621 (US); Otto, Richard B., Crystal Beach, FL 34681 (US)
(74) Representative: Warren, Anthony Robert

(57) **Abstract**

A machine for inspecting a relatively small diameter transparent bottle (20) having a vertical axis has an inspection station (14,16) including an inspection device for carrying out an inspection on the bottle relatively to a vertical inspection axis. The bottle (20) is delivered to the inspection station by a conveyor (10), which includes structure (12) for engaging the sidewall of the bottle. Inspection of the bottle is facilitated by providing a container like adapter (18) having a vertical axis (22), and configured for handling by the conveyor structure (12) so that when the adapter engages the structure, the conveyor will deliver the adapter to the inspection station (14,16). The adapter (18) has a horizontal top surface (26) and a vertical axis (22), and a magnet (28) is mounted in the top surface having a centering axis coincident with the vertical axis (22) of the adapter (18). The bottle (20) to be inspected is located on top of the magnet (28) and temporarily contains metallic material (30) in the bottom portion thereof so that the magnet will operate on the metallic material to locate the axis of the bottle coincident with the centering axis of the magnet.

## Description

The present invention relates to machines which inspect containers and the like, such as bottles, or other hollow objects, for defects.

Transparent containers are conventionally engaged at an inspection location to locate the axis of the container coincident with the axis of the inspection operation. With larger containers, there will always be areas of the container that are not engaged so that inspection of these exposed areas is possible. In certain situations, however, a container can be so small that any engagement of the outer wall effectively prevents inspection.

It is accordingly an object of the present invention to present a container at an inspection station with the axis of the container at the desired location and with the container stable for inspection so that unobstructed viewing of the container profile is possible for noncontact inspection (inspection, measurement, etc,).

According to one aspect of the present invention there is provided an apparatus for facilitating the inspection of containers and the like as defined in claim 1.

According to another aspect, the invention provides a method of facilitating the inspection of containers and the like as defined in claim 7.

The invention also consists in an inspection machine, for example an inspection machine for use with an Individual Section (I.S.) glassware forming machine, including the claimed apparatus and/or operating in accordance with the claimed method, and further consists in an I.S. machine in combination with such an inspection machine.

The present invention will now be described with reference to the accompanying drawings, which illustrate a presently preferred embodiment incorporating the principles of the invention, and in which:-

FIG. 1 is an oblique schematic view of an inspection machine having a conveyor which conveys bottles to a series of inspection stations; and

FIG. 2 is an enlarged elevational cross sectional view of a bottle to be inspected supported by an adapter.

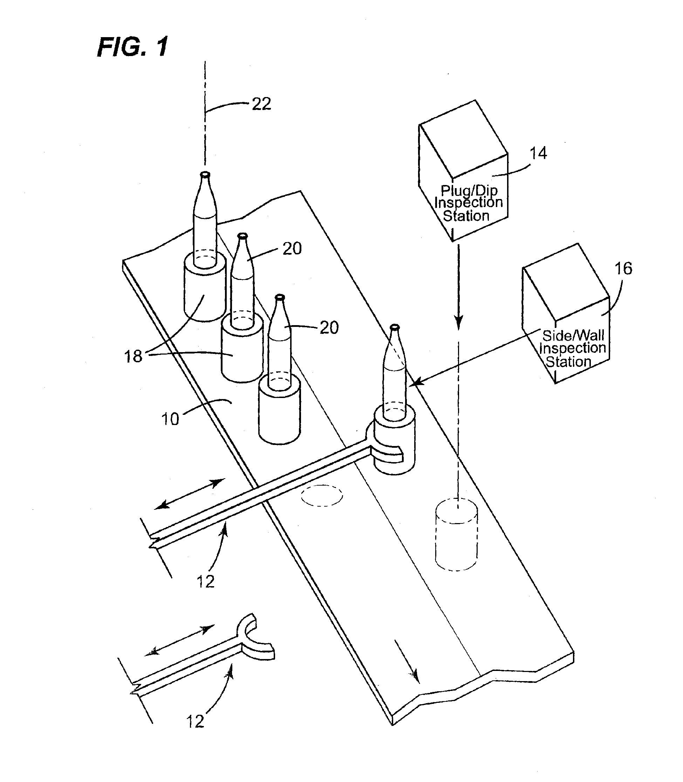

An inspection machine is schematically illustrated in FIG. 1. A conveyor system, which is made up of a conveyor 10 and bottle pushing elements (robotic pushers) 12, locates bottles which could be any color and shape, at a number of inspection stations. The invention is not limited to pushers. These devices could be any handling structure that is normally used to control the displacement of a bottle to be tested. Representative inspection stations are shown as a Plug/Dip Inspection Station 14, which would evaluate the dimension (diameter) of the inner and outer cylindrical surfaces of the bottle finish, and a Side Wall Inspection Station 16, which would evaluate the sidewall dimensions of a bottle.

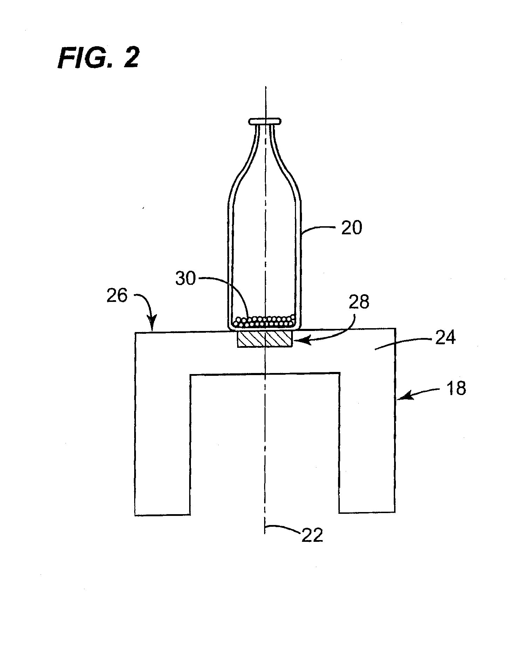

In the present application, bottles are replaced by a bottle assembly, which includes a container carrier or adapter, for example a container like adapter 18, and a bottle 20 to be inspected. The adapter is container like in that it has a configuration which makes it possible for the robotic pusher 12 to handle the container like adaptor 18 in the same manner as a conventionally inspected bottle of the same size as the adapter. The axis 22 of the container like adaptor is the axis of an equivalent bottle. The container like adapter 18 (FIG. 2) has a top portion 24 which has a flat top surface 26 for supporting a bottle 20 to be inspected. A centering permanent magnet 28 is mounted in the top portion of the container like adapter 18. The centering magnet has a localized centering effect whereby magnetizable material, for example ferrous objects, placed within the field will be aligned closely to a vertical centerline, which coincides with the vertical centerline 22 of the container like adapter 18. Metallic material 30 (ferrous objects or spheres as shown) is/are temporarily placed in the bottle 20 to be inspected and the bottle 20 is placed centrally onto the centering magnet portion of the top surface of the container like adapter 18. The attraction between the centering magnet 28 and the metallic spheres 30 holds the bottle 20 on the top surface of the container like adapter 18 and relocates the axis of the bottle 20 to be inspected to, or close to, the vertical centerline of the centering magnet and holds the bottle with such coincidence or approximate or effective coincidence, i.e. so that, in operation, any deviation of the centerline of the bottle from the axis of the inspection operation will be within the acceptable tolerances of the inspection machine. The particulate size and amount of metallic material can be defined to achieve the desired result. The magnet could be a single magnet or a number of magnets arranged to provide the desired centering effect (four flat rectangular magnets could be used). For purposes of clarity "bottle" has been used to describe the item to be inspected and "container" has been used to define the adapter. In the glass forming art, these words are often used interchangeably.

The adapter enables the inspection machine and pushing elements to handle smaller containers than would otherwise be practicable, for example bottles having a diameter (or non-circular bottles having a circumscribing diameter), and/or height, significantly less than that of containers normally handled, and less than that of the adapter. However, the adapter could also be used with larger containers without obstructing inspection.

## Claims

1. An apparatus for facilitating the inspection of containers and the like by a machine for inspecting containers, the machine having an inspection station including an inspection device for carrying out an inspection on a container having a vertical axis, relative to a vertical inspection axis, the machine also having a container conveyor system including structure for engaging the side wall of a container and for displacing the container to the inspection station where the container axis is effectively coincident with the inspection axis, the apparatus for facilitating the inspection comprising:
a container adapter having a vertical axis and configured for handling by the conveyor system structure so that, when the container adapter is engaged by the conveyor system structure, the conveyor system structure will deliver said container adapter to the inspection station with the vertical axis of the container adapter coincident with the inspection axis, said container adapter having a horizontal top surface;
magnet means mounted in or under said horizontal top surface of said container adapter and having a centering axis coincident with said vertical axis of said container adapter, and
magnetically attractable means for placement inside a container at a bottom portion thereof so that, when the container with said magnetically attractable means inside is located on said horizontal top of said container adapter above said magnet means, said magnet means will operate on said magnetically attractable means to cause said axis of the container to be located coincident with said centering axis of said magnet means.

2. An apparatus as defined in Claim 1, wherein said magnetically attractable means comprises ferrous spheres.

3. An apparatus as defined in Claim 1 or 2, wherein said container adapter has a cylindrical outer configuration.

4. An apparatus as defined in Claim 1 2 or 3, wherein said magnet means is centrally located in or under said horizontal top surface of said container adapter.

5. An apparatus as defined in any preceding claim, wherein said magnet means comprises a plurality of magnets that are arranged in or under said horizontal top surface of said container adapter to provide the desired centering effect.

6. An apparatus as defined in any preceding claim, wherein said container adapter is configured to be equivalent to a container having a larger diameter than the circumscribing diameter to be inspected.

7. An method for facilitating the inspection of containers and the like by a machine for inspecting containers, the machine having an inspection station including an inspection device for carrying out an inspection on a container having a vertical axis, relative to a vertical inspection axis, the machine also having a container conveyor system including structure for engaging the side wall of a container and for displacing the container to the inspection station where the container axis is effectively coincident with the inspection axis, the method comprising:
providing a container adapter having a vertical axis and configured for handling by the conveyor system structure so that, when the container adapter is engaged by the conveyor system structure, the conveyor system structure will deliver said container adapter to the inspection station with the vertical axis of the container adapter coincident with the inspection axis, said container adapter having a horizontal top surface;
mounting magnet means in or under said horizontal top surface of said container adapter, said magnet means having a centering axis coincident with said vertical axis of said container adapter;
placing magnetically attractable means inside a container at a bottom portion thereof; and
placing the container with said magnetically attractable means inside on top of said container adapter above said magnet means, whereupon said magnet means will operate on said magnetically attractable means to cause said axis of the container to be located coincident with said centering axis of said magnet means.

8. An inspection machine including apparatus as defined in any of claims 1 to 6.

9. An inspection machine operable in accordance with the method as defined in claim 7.

10. An Individual Section (I.S.) glassware forming machine in combination with an inspection machine as defined in claim 8 or 9.
